# EUROPEAN PATENT SPECIFICATION

(11) **EP 1 777 084 B1**
(45) Date of publication and mention of the grant of the patent: **26.11.2008**
(21) Application number: 05109361.5
(22) Date of filing: 07.10.2005
(51) Int. Cl.: B60D 1/36, B60D 1/00

(54) **Multi function coupling**
Multifunktionskupplung
Attelage multifonctionnel

(43) Date of publication of application: 25.04.2007
(73) Proprietor: VBG Group AB (Publ), 462 28 Vänersborg (SE)
(72) Inventor: Thorén, Anders, 460 64 Frändefors (SE)
(74) Representative: Kraenzmer, Martin

(56) References cited:
- EP-A- 1 398 185
- DE-A1- 10 258 065
- DE-U1- 9 409 992
- FR-A- 605 009
- GB-A- 1 434 093
- US-A- 1 379 874
- US-A- 4 349 211
- US-A1- 2004 046 361

## Description

### Field of the invention

The present invention relates to a trailer coupling for connecting a traction vehicle to a trailer, to be pulled in a pulling direction by said vehicle. The trailer coupling comprises a coupling part mounted at the back of the vehicle being adapted to receive a coupling end part of a drawbar fixed to the trailer by relative movement of the coupling part and the coupling end part in a receiving direction. The coupling end part is connected to the drawbar via a joint.

### Technical background

Traditionally, a vehicle is connected manually to a trailer. This connection is carried out after the vehicle has been positioned in relation to the trailer. Usually, the drawbar of the trailer is provided with a hole, in which a cylinder from the coupling part is mounted for mechanical connection. However, such handling is time-consuming and detrimental to the operator.

Drawbacks with prior art couplings are that they are not user friendly positioned regarding to mechanical, hydraulic, pneumatic and electrical couplings, there is also the risk for wrong handling due to the human factor. Further there is ergonomic problems and personal injury.

EP-A-1 398185 discloses a tow coupling with a coupling jaw and a clutch body, which may be inserted into the coupling jaw. The clutch body is provided with a coupling cone with a circumferential breech nut for insertion or retraction of the radially adjustable locking segments surrounding the coupling cone.

### Summary of the invention

One object of the present invention is to provide an automatic coupling for a vehicle and a trailer, that in relation to prior art coupling systems, provides a coupling with improved characteristics.

Another object of the present invention is to provide a coupling which is easy to handle and provides a safe connection for the trailer.

Further object of the present invention is to provide increased personal safety, hence the driver does not need to leave the truck and enter the roadway during connection.

At least one of the above mentioned object is achieved by a trailer coupling for connecting a traction vehicle to a trailer, to be pulled in a pulling direction by said vehicle. The coupling comprises a coupling part mounted at the back of the vehicle being adapted to receive a coupling end part of a drawbar fixed to the trailer by relative movement of the coupling part and the coupling end part in a receiving direction. The coupling end part is connected to the drawbar via a joint. A locking part is arranged to engage with the outer geometry of said coupling end part, so as to secure the mechanical connection of the vehicle to the trailer. It is advantageous to engage the locking part at the geometry/perimeter of the coupling end part from a construction point of view.

The locking part has a wedge surface formed to force the coupling end part further into the coupling part during activation of said locking part. A wedge can maintain the locking function independent of wear to surfaces and remain slack free. It is further possible to provide a gear ratio to increase the engaging force due to the angle of the wedge surface. The use of wedge surfaces make it possible to compensate for wear, and it is possible to achieve less play.

The coupling end part is provided with a recess in the outer geometry having a wedge surface for interaction with said wedge surface of the locking part. One advantage with a recess is that it does not have any protruding parts that could interfere during the engagement between the coupling part and the coupling end part. The recess can further be performed with large contact surfaces for the wedge surface which is advantageous from a wear point of view.

Advantageously the locking part is movable mainly in a direction normal/perpendicular to said pulling direction for locking of said coupling end part. A locking movement in the normal direction to the pulling direction will provide an effective locking of the coupling. The wedges can operate vertical as well as horizontal or in an inclined direction. It is possible to use one locking part or more, if two wedges are used they can operate either in the same direction or in opposite directions. Preferably two locking parts are symmetrically located for locking of the coupling end part. It is further advantageous to provide two, from each other independent, locking parts since a redundant system is achieved.

Advantageously an operable blocking means, as an safety lock pin, is provided for blocking the locking parts in locked position. To provide a reliable and safe connection between vehicle and trailer a blocking means can be used to block the wedge in locked position, by moving the safety lock pin perpendicular to the movement of the wedge.

According to the inventive concept the coupling end part is tapered, in the receiving direction, for guiding said coupling end part both in horizontal and vertical direction during connection. A tapered geometry increases the possibility to guide the coupling during connection.

Preferably an openable cover means is provided for covering an engagement opening of said coupling part to reduce the risk of dirt and moisture to penetrate through said opening. Further the cover means, in open position, provides a surface for guiding the coupling end part to engagement with said coupling part.

Advantageously the guiding surface of the cover means, in open position, is sloping in direction towards the opening of said coupling part.

### Brief description of drawings

By way of example, embodiments of the present invention will now be described with reference to the accompanying figures of drawings in which;

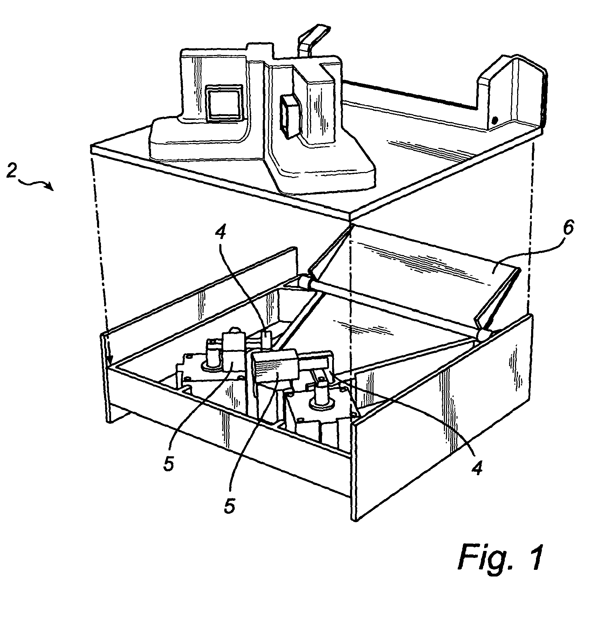

Fig 1 is a perspective view of partly exploded coupling part.
Fig 2a shows in a side view the cover means in closed position.
Fig 2b shows in a side view how the cover means is opened.
Fig 3a is a perspective view showing the coupling end part being connected with the coupling part.
Fig 3b is a perspective view of the coupling part connected with the coupling end part in detail.
Fig 3c is a perspective view of the coupling showing the engagement of the locking wedge.
Fig 3d is a perspective view of the coupling showing the activation of the blocking means.

### Description of Preferred Embodiments

One embodiment of the trailer coupling, according to the invention, will now be described in relation to the figures. The trailer coupling 1 according to the present invention comprises a coupling part 2 which is adapted to be attached to a drawbeam of a traction vehicle (not shown), and a coupling end part 3 which has a main tapered portion and a rear portion, which is arranged via a joint 7 in a drawbar of a trailer (not shown). The rear portion of the coupling end part 3 is turnable in the joint 7, and the entire drawbar being pivotally arranged at the trailer, the coupling end part 3 is positionable in an arbitrary position. The coupling part 2 has a catching mouth with a receiving space which is adapted to receive the coupling end part 3.

The main portion of the coupling end part 3 is wedge-shaped in the horizontal plane. By wedge-shape is in the first place meant an essentially triangular shape of the kind as shown in the figures, but it should be noted that the main portion could also be of any other tapered shape. The main portion is preferably at least partially hollow. The coupling end part 3 is further provided with a recess on each side in the front outer geometry/perimeter. The recess forms a wedge surface for locking and pulling of the coupling end part 3 into connection with the coupling part 2. The wedge surface has an orientation with the normal direction essentially in the pulling direction to provide a proper connection force for the coupling.

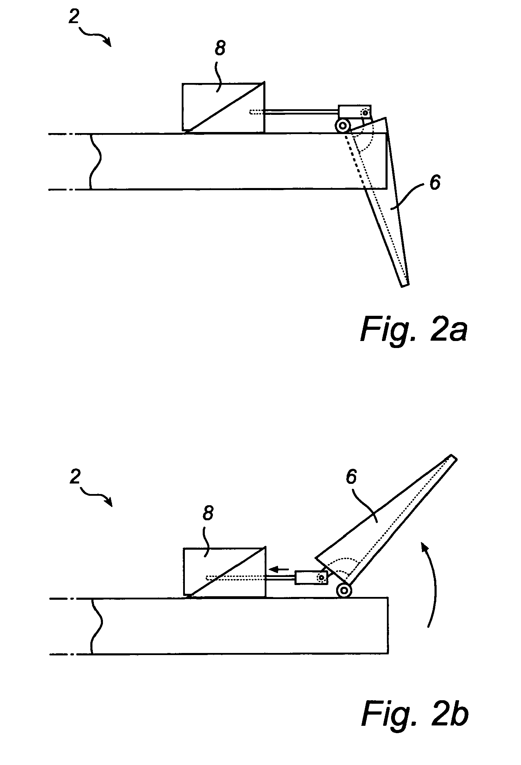

Fig 2a-b shows how the cover means 6 is operated between a closed position (fig 2a), preventing dirt and moisture from penetrating into the inner portion of the coupling part. In fig 2b the cover means 6 is operated to an open position by an power source. The cover means will, in the open position, function as a guide for the coupling end part when entering into the coupling part, since it is sloping in direction towards the opening of said coupling part 2.

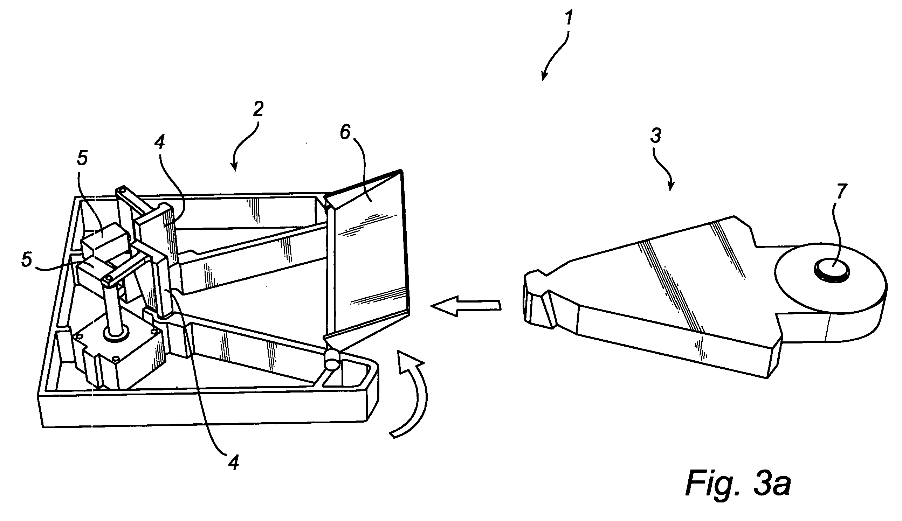

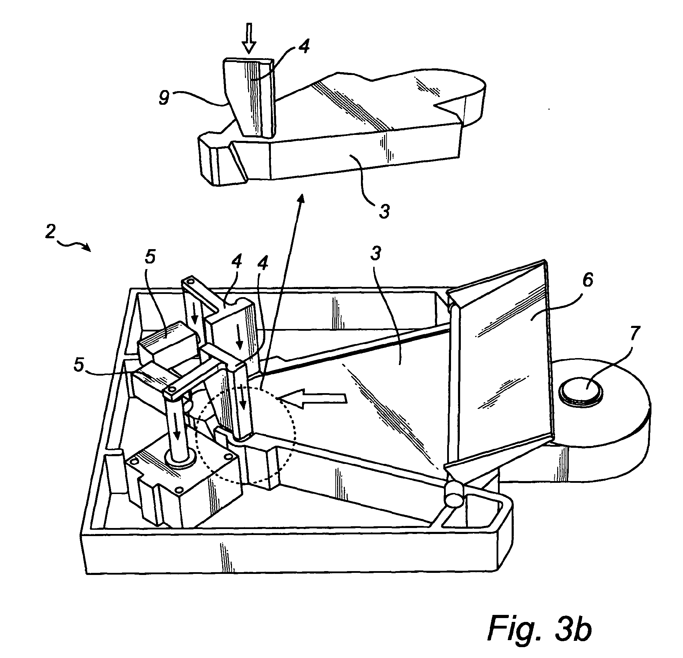

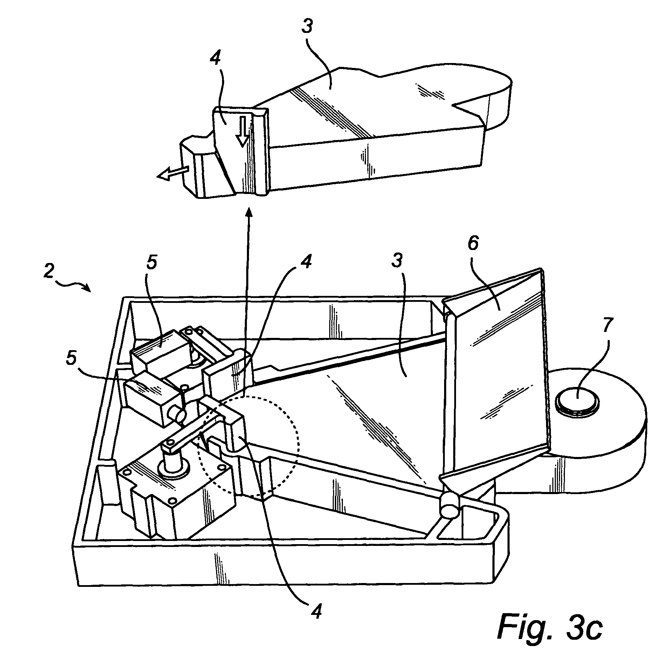

Before a connection between vehicle and trailer is started the coupling part is prepared for connection. As shown in fig 3a the cover means is opened and the locking wedges 4 are in an open position, ready to receive the coupling end part. Fig 3b shows how he coupling end part 3 is inserted into the catching mouth of the coupling part 2, the locking wedges 4 are engaging the coupling end part and the wedge surface 9 of the locking wedge 4 comes in sliding contact with the wedge surface of the recess in the coupling end part. The locking wedges are operated by a power source for example an electric motor, pneumatic or hydraulic cylinder. Fig 3c shows how the coupling end part 3 is forced into tight contact with the coupling part by moving the locking wedges 4 downwards to engagement between the wedge surfaces. The sliding interaction provides a gear ratio for the locking wedges 4 during connection of the coupling. Consequently the trailer is mechanically secured to the traction vehicle. If there is tolerances or mechanical wear associated with the components for the locking wedge it is possible, with the design according to the invention, to avoid play since the wedge can be moved further until a tight connection of the coupling is achieved.

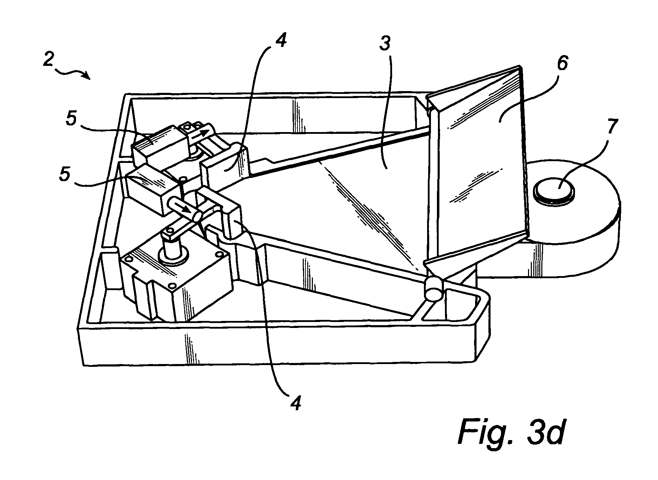

The angle between the operational movement of the locking wedge 4 and the contact wedge surfaces provides a gear ratio for amplification of the operation force to a connecting force. The safety blocking means 5 shown in fig 3d can be used to block the locking wedges 4 in the locked position if the locking wedge 4 is not self-locking. The blocking means 5 will prevent the coupling from unintentional loosening of the locking wedge 4, for example by vibrations or rattle. To provide a safe operation of the blocking means 5 it is performed as a safety lock pin, which is spring loaded towards the blocking position and has to be actively maneuvered, e.g. by pneumatic or hydraulic acting actuators, for release from the blocking position. It is of course possible to use other kind of components for the operation of the blocking means 5.

In this manner it is possible to achieve a proper and safe connection of the trailer.

It will be appreciated that the embodiment described above can be modified and varied by a person skilled in the art without departing from the inventive concept defined in the claims. For example the coupling can be designed in a different way, as long as the locking wedge engages in the outer geometry.

## Claims

1. A trailer coupling (1) for connecting a traction vehicle to a trailer, to be pulled in a pulling direction by said vehicle, comprising a coupling part (2) mounted at the back of the vehicle being adapted to receive a coupling end part (3) of a drawbar fixed to the trailer by relative movement of the coupling part (2) and the coupling end part (3) in a receiving direction, said coupling end part (3) being connected to the drawbar via a joint (7) wherein
the coupling end part is wedge-shaped in the horizontal plane, and is provided with a recess in its outer geometry, said recess having a wedge surface, and
wherein
the coupling further comprises a locking part (4) arranged to engage with said recess, so as to secure the mechanical connection of the vehicle to the trailer
**characterized in that** said locking part (4) having a wedge surface formed to interact with said wedge surface of said recess to force the coupling end part (3) further into the coupling part (2) during activation of said locking part.

2. A trailer coupling (1) according to claim 1, wherein said locking part (4) is movable mainly in a direction normal to said pulling direction for locking of said coupling end part (3).

3. A trailer coupling (1) according to any of the preceding claims, wherein an operable blocking means (5) is provided for blocking the locking part (4) in locked position.

4. A trailer coupling (1) according to any of the preceding claims, wherein two locking parts (4) are symmetrically located for locking of the coupling end part (3).

5. A trailer coupling according to claim 4, wherein said locking parts (4) are arranged on either side of a central axis of said coupling end.

6. A trailer coupling according to claim 4, wherein said locking parts are movable along parallel displaced paths.

7. A trailer coupling (1) according to any of the preceding claims, wherein the coupling end part is tapered, in the receiving direction, for guiding said coupling end part both in horizontal and vertical direction during connection.

8. A trailer coupling (1) according to any of the preceding claims, wherein an openable cover means (6) is provided for covering an engagement opening of said coupling part (2) to reduce the risk of dirt and moisture to penetrate through said opening.

9. A trailer coupling (1) according to claim 8, wherein said cover means (6), in open position, provides a surface for guiding the coupling end part (3) to engagement with said coupling part (2).

10. A trailer coupling (1) according to claim 9, wherein said guiding surface of the cover means (6), in open position, is sloping in direction towards the opening of said coupling part (2).

## Patentansprüche

1. Anhängerkupplung (1) zum Verbinden eines Zugfahrzeugs mit einem Anhänger, der durch dieses Fahrzeug in eine Zugrichtung gezogen werden soll, umfassend einen an der Hinterseite des Fahrzeugs angebrachten Kupplungsteil (2), der dazu geeignet ist, einen Kupplungsendteil (3) einer am Anhänger fixierten Anhängerdeichsel durch eine relative Bewegung des Kupplungsteils (2) und des Kupplungsendteils (3) in eine Aufnahmerichtung aufzunehmen, wobei der Kupplungsendteil (3) über ein Gelenkstück (7) mit der Anhängerdeichsel verbunden ist, wobei
der Kupplungsendteil in der waagerechten Ebene keilförmig ist und in seiner äußeren Geometrie mit einer Einbuchtung versehen ist, wobei die Einbuchtung eine Keilfläche aufweist, und wobei
die Kupplung ferner einen Sperrteil (4) umfasst, der dazu eingerichtet ist, mit der Vertiefung einzugreifen, um die mechanische Verbindung des Fahrzeugs mit dem Anhänger sicherzustellen,
**dadurch gekennzeichnet, dass** der Sperrteil (4) eine Keilfläche aufweist, die zur Wechselwirkung mit der Keilfläche der Einbuchtung gebildet ist, um den Kupplungsendteil (3) während der Aktivierung des Sperrteils weiter in den Kupplungsteil (2) zu zwängen.

2. Anhängerkupplung (1) nach Anspruch 1, wobei der Sperrteil (4) hauptsächlich in eine senkrecht zur Zugrichtung verlaufende Richtung beweglich ist, um den Kupplungsendteil (3) zu sperren.

3. Anhängerkupplung (1) nach einem der vorhergehenden Ansprüche, wobei ein betätigbares Arretiermittel (5) bereitgestellt ist, um den Sperrteil (4) in der gesperrten Stellung zu arretieren.

4. Anhängerkupplung (1) nach einem der vorhergehenden Ansprüche, wobei zwei Sperrteile (4) symmetrisch angeordnet sind, um den Kupplungsendteil (3) zu sperren.

5. Anhängerkupplung nach Anspruch 4, wobei die Sperrteile (4) an beiden Seiten einer mittleren Achse des Kupplungsendes angeordnet sind.

6. Anhängerkupplung nach Anspruch 4, wobei die Sperrteile entlang parallel verschobener Wege beweglich sind.

7. Anhängerkupplung (1) nach einem der vorhergehenden Ansprüche, wobei der Kupplungsendteil in der Aufnahmerichtung verjüngt ist, um den Kupplungsendteil während der Verbindung sowohl in der waagerechten als auch in der senkrechten Richtung zu führen.

8. Anhängerkupplung (1) nach einem der vorhergehenden Ansprüche, wobei ein aufmachbares Abdeckmittel (6) bereitgestellt ist, um eine Eingreiföffnung des Kupplungsteils (2) abzudecken, um die Gefahr des Eindringens von Schmutz und Feuchtigkeit durch diese Öffnung zu verringern.

9. Anhängerkupplung (1) nach Anspruch 8, wobei das Abdeckmittel (6) in der offenen Stellung eine Fläche bereitstellt, um den Kupplungsendteil (3) in einen Eingriff mit dem Kupplungsteil (2) zu führen.

10. Anhängerkupplung (1) nach Anspruch 9, wobei sich die Führungsfläche des Abdeckmittels (6) in der offenen Stellung in die Richtung zur Öffnung des Kupplungsteils (2) neigt.

## Revendications

1. Attelage de remorque (1) pour connecter un véhicule de traction à une remorque, à tirer dans une direction de tirage par ledit véhicule, comprenant une partie d'attelage (2) montée à l'arrière du véhicule étant apte à recevoir une partie d'extrémité d'attelage (3) d'un crochet d'attelage fixé à la remorque par mouvement relatif de la partie d'attelage (2) et de la partie d'extrémité d'attelage (3) dans une direction de réception, ladite partie d'extrémité d'attelage (3) étant connectée au crochet d'attelage par l'intermédiaire d'une jointure (7), dans lequel
la partie d'extrémité d'attelage est en forme de cale dans le plan horizontal, et est munie d'un renfoncement dans sa géométrie extérieure, ledit renfoncement ayant une surface de cale, et dans lequel
l'attelage comprend en outre une partie de verrouillage (4) agencée pour se mettre en prise avec ledit renfoncement, de manière à sécuriser la connexion mécanique du véhicule à la remorque,
**caractérisé en ce que** ladite partie de verrouillage (4) a une surface de cale formée pour interagir avec ladite surface de cale dudit renfoncement pour forcer la partie d'extrémité d'attelage (3) encore plus dans la partie d'attelage (2) au cours de l'activation de ladite partie de verrouillage.

2. Attelage de remorque (1) selon la revendication 1, dans lequel ladite partie de verrouillage (4) est déplaçable principalement dans une direction normale à ladite direction de tirage pour le verrouillage de ladite partie d'extrémité d'attelage (3).

3. Attelage de remorque (1) selon l'une quelconque des revendications précédentes, dans lequel un moyen de blocage utilisable (5) est fourni pour bloquer la partie de verrouillage (4) en position verrouillée.

4. Attelage de remorque (1) selon l'une quelconque des revendications précédentes, dans lequel deux parties de verrouillage (4) sont situées symétriquement pour le verrouillage de la partie d'extrémité d'attelage (3).

5. Attelage de remorque selon la revendication 4, dans lequel lesdites parties de verrouillage (4) sont agencées de chaque côté d'un axe central de ladite extrémité d'attelage.

6. Attelage de remorque selon la revendication 4, dans lequel lesdites parties de verrouillage sont déplaçables le long de chemins de déplacement parallèles.

7. Attelage de remorque (1) selon l'une quelconque des revendications précédentes, dans lequel la partie d'extrémité d'attelage est conique, dans la direction de réception, pour guider ladite partie d'extrémité d'attelage dans la direction horizontale et dans la direction verticale pendant la connexion.

8. Attelage de remorque (1) selon l'une quelconque des revendications précédentes, dans lequel un moyen de couvercle ouvrable (6) est fourni pour couvrir une ouverture de mise en prise de ladite partie d'attelage (2) pour réduire le risque de pénétration d'impuretés et d'humidité à travers ladite ouverture.

9. Attelage de remorque (1) selon la revendication 8, dans lequel ledit moyen de couvercle (6), en position ouverte, fournit une surface pour guider la partie d'extrémité d'attelage (3) pour la mise en prise avec ladite partie d'attelage (2).

10. Attelage de remorque (1) selon la revendication 9, dans lequel ladite surface de guidage dudit moyen de couvercle (6), en position ouverte, est inclinée dans une direction vers l'ouverture de ladite partie d'attelage (2).
